Europäisches Patentamt

European Patent Office

Office européen des brevets

(11) Veröffentlichungsnummer: **0 502 312 A2**

# EUROPÄISCHE PATENTANMELDUNG

(21) Anmeldenummer: **92101513.7**

(22) Anmeldetag: **30.01.92**

(51) Int. Cl.5: **G01S 5/08**

(30) Priorität: **06.03.91 DE 4107116**

(43) Veröffentlichungstag der Anmeldung:
**09.09.92 Patentblatt 92/37**

(84) Benannte Vertragsstaaten:
**DE FR GB**

(71) Anmelder: **ROBERT BOSCH GMBH**
**Postfach 30 02 20**
**W-7000 Stuttgart 30(DE)**

(72) Erfinder: **Duckeck, Ralf, Dipl.-Ing.**
**Zierenbergstrasse 11**
**W-3200 Hildesheim(DE)**

(54) **Verfahren zur Standortbestimmung eines mobilen Funkempfängers.**

(57) Es wird ein Verfahren zur Standortbestimmung eines mobilen Funkempfängers beschrieben, der mit einem Dokoder zur Dekodierung des Radio-Daten-Signals (RDS) und mit Richtantennenanordnung ausgestattet ist. Dazu werden die Radio-Daten-Signale wenigstens dreier ortsfester Sender ausgewertet und die relativen Einfallswinkel ihrer Funksignale bestimmt. Über die Auswertung der Radio-Daten-Signale lassen sich die Sender ermitteln und ihre Standort-Koordinaten einer gespeicherten Tabelle entnehmen. Aus den relativen Einfallswinkeln und den Standort-Koordinaten der ortsfesten Sender können dann die Standort-Koordinaten des mobilen Funkempfängers über trigonometrische Funktionen berechnet werden.

FIG.1

EP 0 502 312 A2

Die Erfindung betrifft ein Verfahren zur Standortbestimmung eines Empfängers nach dem Oberbegriff des Anspruchs 1.

Aus der DE-OS 37 16 32Ø und der DE-OS 38 37 633 sind Ortungs- und Navigationssysteme für mobile Funkstationen bekannt. Dabei handelt es sich um Funkstationen in einem zellularen Netz, z. B. dem C-Fernsprechnetz. Der Standort der mobilen Funkstation wird durch die stationäre Sendestation festgestellt, indem bei bestimmten Signalen die Laufzeit gemessen wird, die das Signal benötigt, um vom stationären Sender zum mobilen Empfänger und vom mobilen Empfänger zum stationären Empfänger zurückzukommen. Durch Auswertung verschiedener Laufzeiten zu mehreren Feststationen kann so die relative Position des Empfängers ermittelt und diesem dann wiederum auf dem Funkwege mitgeteilt werden.

Dazu ist es notwendig, die stationären Sender untereinander zu koppeln, damit die unterschiedlichen Laufzeitinformationen ausgewertet werden können. Der Aufwand für die Auswertung liegt hier zwar auf der Seite der Feststationen, die mobile Funkstation benötigt aber neben einem Empfangs- auch ein Sendegerät.

Eine breite Anwendungsmöglichkeit für die Standortbestimmung, z. B. von Kraftfahrzeugen, ist dadurch ausgeschlossen, denn die Verbreitung von mobilen Funkstationen, die sowohl Sender als auch Empfänger enthalten, z. B. Funktelefonen, wird auch in Zukunft auf einen relativ kleinen Benutzerkreis beschränkt bleiben.

Dagegen ist heutzutage fast jedes Kraftfahrzeug mit einem Rundfunkempfänger ausgestattet, wobei sich zunehmend solche Empfänger durchsetzen, die das von den Rundfunksendern ausgestrahlte Radio-Daten-Signal dekodieren können. Dieses Radio-Daten-Signal oder ein anderes Datensignal überträgt kodiert Programminformationen der empfangenen Sender sowie Listen von Frequenzen anderer Sender, die das gleiche Programm ausstrahlen.

Der Erfindung liegt die Aufgabe zugrunde, ein Verfahren zur Standortbestimmung eines Empfängers anzugeben, das mit einer passiven Auswertung der Daten-Signale austrahlenden Sender auskommt.

Diese Aufgabe wird bei einem Verfahren nach dem Oberbegriff des Anspruchs 1 durch die im Kennzeichen angegebenen Merkmale gelöst.

Zur Erlangung der gewünschten Information werden einmal die Feldstärken der von der Richtantennenanordnung aufgefangenen Signale ausgewertet, mit denen der Empfänger gespeist wird. Eine solche Richtantennenanordnung dient im normalen Betrieb dazu, den eingestellten Sender im Signalpegel anzuheben und Sender oder Störungen aus anderen Richtungen auszublenden. Dabei werden von mehreren Richtantennen diejenigen eingeschaltet, welche den größten Signalpegel des eingestellten Senders am Empfängereingang erzeugen.

Die Auswahl der anzuschaltenden Antennen wird anhand einer zuvor durchgeführten Messung der relativen Feldstärken an diesen Antennen vorgenommen. Diese Messung läßt sich in einfacher Weise auch dazu ausnutzen, ein Winkelsignal ableiten, das den Winkel des einfallenden Senders zu einer Bezugsachse bildet. Dementsprechend können auch die Winkel anderer einfallender Sender zur Bezugsachse bestimmt werden bzw. Werte ermittelt werden, die die relativen Winkel zwischen den einfallenden Sendern beschreiben.

Weiterhin läßt sich an Hand des dekodierten Radio-Daten-Signals durch Auswertung des Namens und der Frequenz des empfangenen Senders eine eindeutige Identifizierung dieses Senders erzielen. Die Koordinaten derartiger Sender, die Radio-Daten-Signale abstrahlen, können in einer Koordinatentabelle abgespeichert werden.

Nun lassen sich die entsprechenden Koordinaten aus der Tabelle entnehmen und mit den ermittelten relativen Einfallswinkeln der Sender verknüpfen. Wenn man davon ausgeht, daß mindestens drei Sender zur Standortbestimmung erforderlich sind, erhält man den eigenen Standort dadurch, daß drei von einem Punkt ausgehende Strahlen so in einem Koordinatennetz positioniert werden, daß jeder Strahl durch die Koordinaten eines Senderstandortes verläuft. Dadurch ist der eigene Standort eindeutig festgelegt. Die exakte Berechnung kann mit trigonometrischen Funktionen erfolgen, in die die Werte der Koordinaten der Sender sowie der relativen Winkel eingesetzt werden.

Vorzugsweise läßt sich für die Bestimmung der Koordinaten des eigenen Standorts des mobilen Funkempfängers die Methode des "Rückwärtseinschneidens" anwenden. Dies ist eine aus dem Vermessungswesen an sich bekannte Methode, auf trigonometrischer Grundlage die Lage von Geländepunkten zur Anfertigung von Lageplänen zu bestimmen.

Die hierfür erforderlichen Verfahrensschritte zur Berechnung sind relativ kurz und einfach programmierbar, so daß in der praktischen Ausführung mit einer geringen Rechenkapazität und Berechnungszeit zu rechnen ist, so daß die Ermittlung ohne weiteres von dem in derartigen Funkempfängern ohnehin vorhandenen Mikrocomputer mit übernommen werden kann.

Durch die kurze Berechnungszeit ergibt sich auch die Möglichkeit, die Berechnung zyklisch mit aktuellen Werten zu wiederholen. Auf Grund der aktuellen Werte können dann aus einem Punktehaufen ermittelter Koordinaten diejenigen eleminiert werden, die z. B. auf Grund von Störungen bei der Messung der Einfallswinkel extrem abweichen und aus den verbleibenden Koordinaten Mittelwerte errechnet werden. Auf diese Weise läßt sich die Genauigkeit erheblich steigern.

Das Verfahren bietet dann die Möglichkeit, die berechneten Standort-Koordinaten des mobilen Funkempfängers mit streckenspezifischen und/oder geographischen Kennungen von über das Radio-Daten-Signal im Traffic-Message-Channel übertragener Verkehrsnachrichten zu verknüpfen.

Dadurch lassen sich aus den übertragenen Verkehrsnachrichten diejenigen selektieren, welche für den augenblicklichen Standort von Bedeutung sind, und alle übrigen ausblenden.

Weiterbildungen und vorteilhafte Ausgestaltungen des Verfahrens ergeben sich aus den Ansprüchen, der weiteren Beschreibung und der Zeichnung, an Hand der die Erfindung erläutert wird.

In der Zeichnung zeigen:

Fig. 1    eine schematische Draufsicht eines Fahrzeugs mit einem mobilen Funkempfänger sowie einem Richtantennensystem,

Fig. 2    ein Flußdiagramm zur Veranschaulichung des Verfahrensablaufs für die Standortberechnung,

Fig. 3    eine graphische Darstellung zur Erläuterung des Rückwärtseinschneidens.

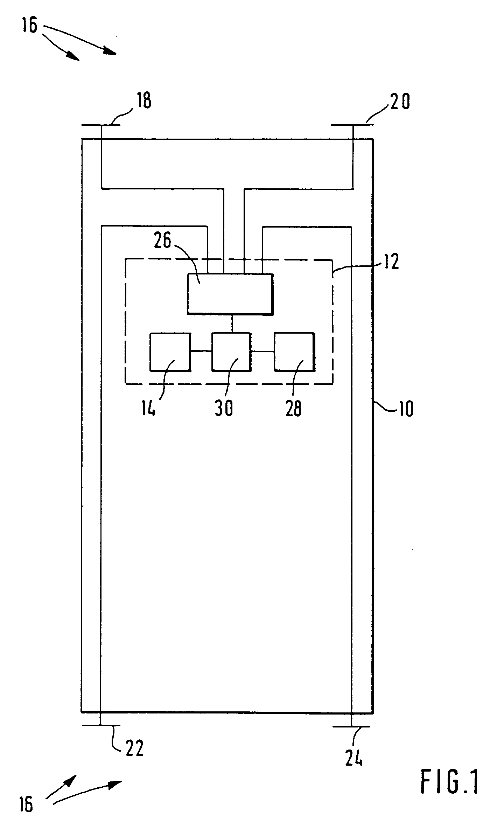

Das in Fig. 1 dargestellte Fahrzeug 10 enthält einen Rundfunkempfänger 12 mit einem RDS-Dekoder 14. Der Rundfunkempfänger 10 ist mit einer Richtantennenanordnung 16 verbunden, die an den Fahrzeugecken z. B. im Bereich der Stoßstangen angeordnete Richtantennen 18, 20, 22, 24 umfaßt. Die Richtantennenanordnung 16 ist Bestandteil eines adaptiven Antennensystems, das im Empfänger eine Auswerte- und Auswahlschaltung 26 enthält, die diejenigen Antennen 18, 20, 22, 24 an den Empfängereingang schalten, die den höchsten Signalpegel des eingestellten Senders erzeugen.

Im Zusammenhang mit der Auswertung der an den Antennen 18, 20, 22, 24 anstehenden Feldstärken läßt sich auch der Einfallswinkel angeben, unter dem Signale des eingestellten Senders relativ zu einer Bezugsachse, z. B. zur Fahrzeugachse, einfallen. Ferner ist im Empfänger 12 ein Speicher 28 vorhanden, in dem die Koordinaten der Standorte aller Sender, die Radio-Daten-Signale ausstrahlen, verzeichnet sind, sowie ein Rechner 30 zur Errechnung der Koordinaten des eigenen Standorts.

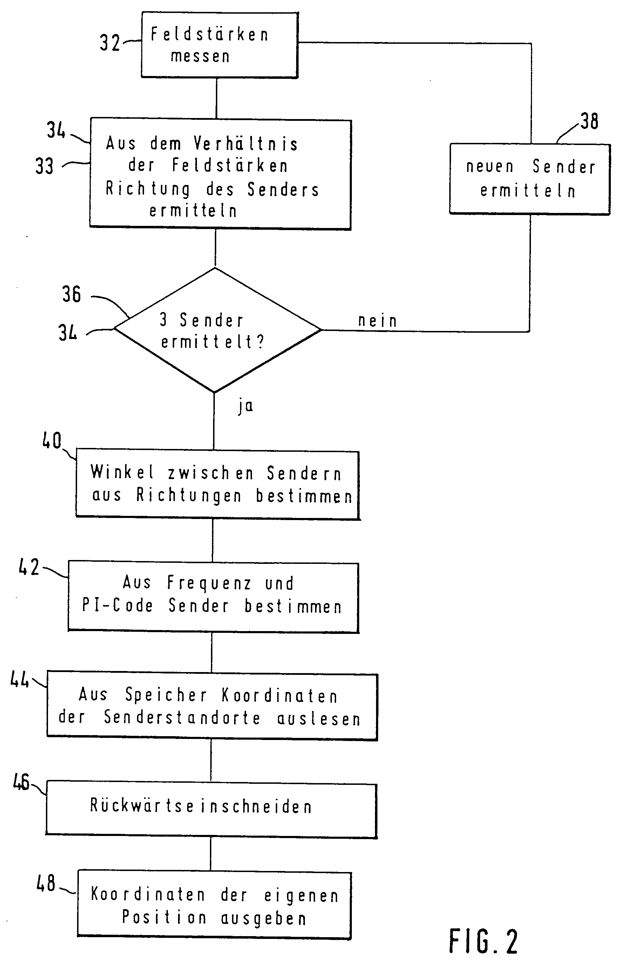

Das in Fig. 2 dargestellte Flußdiagramm veranschaulicht den Verfahrensablauf bei der Bestimmung der Koordinaten des eigenen Standorts. Es wird davon ausgegangen, daß mehrere Sender im Empfangsbereich des mobilen Empfängers Sendungen mit RDS-Datentelegrammen ausstrahlen.

Im ersten Verfahrensschritt 32 wird die Feldstärke eines empfangenen Senders von den Empfangsantennen gemessen und in einem zweiten Verfahrensschritt 34 aus dem Verhältnis der Feldstärken die Richtung des Senders ermittelt.

In einem dritten Verfahrensschritt 36 wird überprüft, wie viele Sender bereits ausgewertet wurden. Sind noch keine drei Sender ausgewertet, so wird der Empfänger in einem vierten Verfahrensschritt 38 veranlaßt, einen neuen Sender zu suchen und darauf abzustimmen. Der erste 32, zweite 34 und dritte Verfahrensschritt 36 sowie gegebenenfalls auch der vierte 38 werden dann so lange wiederholt, bis insgesamt drei Sender ausgewertet wurden.

Zur Steigerung der Genauigkeit könnten auch noch die Richtungen weiterer Sender ermittelt werden. Im vorliegenden Fall beschränkt sich das Verfahren jedoch auf drei Sender.

Anschließend werden in einem fünften Verfahrensschritt 40 die relativen Winkel der Sender, d. h. die Winkel zwischen den Sendern, bestimmt. Anschließend werden in einem sechsten Verfahrensschritt 42 aus den Frequenzen und dem PI-Code die Sender bestimmt, welche den Richtungen zugeordnet sind. Die Auswertungen des PI-Codes und der Frequenzen ermöglicht hier die eindeutige Zuordnung des betreffenden Senders.

Über die ermittelten Sender werden nun in einem siebenten Verfahrensschritt 44 Speicherplätze eines Speichers adressiert, welche die zugehörigen Koordinaten der Senderstandorte aufweisen. Diese Koordinaten werden gelesen und einem Programm übergeben, das in einem achten Verfahrensschritt 46 nach der Methode des Rückwärtseinschneidens die Koordinaten des eigenen Standorts ermittelt und in einem neunten Verfahrensschritt 48 ausgibt.

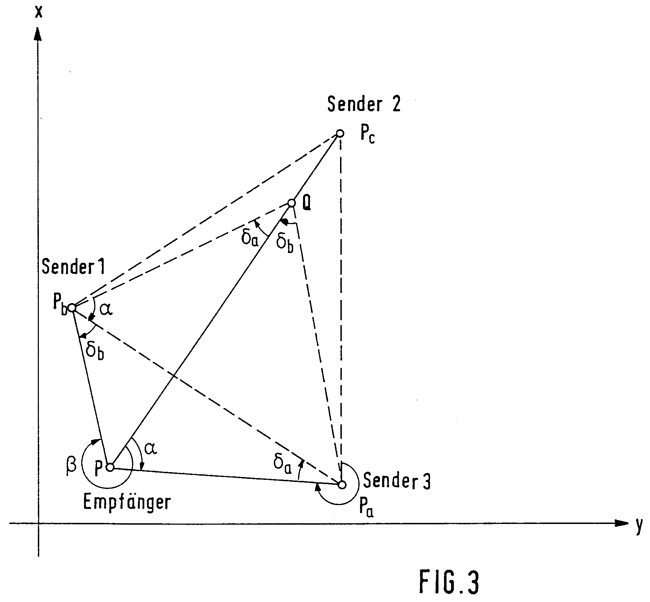

Zur Erläuterung dieses Verfahrens wird auf Fig. 3 Bezug genommen. Dort sind die Koordinaten der Sender in einem kartesischem Koordinatensystem eingetragen, wobei der Sender 1 die Koordinaten $P_b$, der Sender 2 die Koordinaten $P_c$ und der Sender 3 die Koordinaten $P_a$ erhält. Der Standort des mobilen Funkempfängers besitzt die Koordinaten P. Diese Koordinaten gilt es an Hand der Koordinaten $P_b$, $P_c$ und $P_a$, zu ermitteln.

Dazu wird zuerst ein Hilfspunkt Q berechnet, der auf einem Kreis liegt, welcher zwei der Koordinaten der stationären Sender, im Beispiel $P_b$ und $P_c$ sowie den gesuchten Punkt P schneidet. Man erhält die Koordinaten des Hilfspunktes Q durch Einsetzen der ermittelten relativen Winkel $\alpha$ für den Winkel zwischen

3

den Sendern 2 und 3, sowie $\beta$ für den Winkel zwischen den Sendern 2 und 1 in die nachfolgend dargestellten Formeln.

$$\mathrm{tg}\ z_a^b = \frac{y_b - y_a}{x_b - x_a}$$

$$z_a^q = z_a^b - \beta \qquad z_b^q = z_a^b - \alpha + 2\pi$$

$$A_1 = \Delta y_a^b - \Delta x_a^b\ \mathrm{tg}\ z_b^q$$

$$B_1 = \Delta y_a^b - \Delta x_a^b\ \mathrm{tg}\ z_a^q$$

$$C_1 = \mathrm{tg}\ z_a^q - \mathrm{tg}\ z_b^q$$

$$\Delta x_a^q = \frac{A_1}{C_1} \qquad \Delta x_b^q = \frac{B_1}{C_1}$$

$$\Delta y_a^q = \Delta x_a^q\ \mathrm{tg}\ z_a^q \qquad \Delta y_b^q\ \mathrm{tg}\ z_b^q$$

$$y_Q = y_a + \Delta y_a^q \qquad x_Q = x_a + \Delta x_a^q$$

Daraus ergeben sich schließlich die X- und Y-Koordinaten für den Hilfspunkt Q. Nun berechnet man damit die Koordinaten des gesuchten Standorts mit dem Punkt P, indem die ermittelten Koordinaten des Hilfspunktes Q in die nachfolgenden Formeln eingesetzt werden.

$$\mathrm{tg}\ z_q^c = \frac{y_c - y_q}{x_c - x_q}$$

$$\delta_a = z_q^c + \alpha \qquad \delta_b = z_q^c + \beta$$

$$A_2 = \Delta y_a^b - \Delta x_a^b\ \mathrm{tg}\ \delta_b$$

$$B_2 = \Delta y_a^b - \Delta x_a^b\ \mathrm{tg}\ \delta_a$$

$$C_2 = \mathrm{tg}\ \delta_a - \mathrm{tg}\ \delta_b$$

$$\Delta x_a = \frac{A_2}{C_2} \qquad \Delta x_b = \frac{B_2}{C_2}$$

$$\Delta y_a = \Delta x_a\ \mathrm{tg}\ \delta_a \qquad \Delta y_b = \Delta x_b\ \mathrm{tg}\ \delta_b$$

$$\boxed{y_p = y_a + \Delta y_a \qquad x_p = x_a + \Delta x_a}$$

Nach Berechnung dieser Formeln ergibt sich dann das Koordinatenpaar aus den Koordinaten $X_p$ und $Y_p$ für den eigenen Standort P.

Die Berechnung dieses Wertes kann zyklisch wiederholt werden, so daß aus einer Menge gestreuter Werte die extremen Ausreißer, welche durch Störungen, z. B. durch Reflektionen der einfallenden Funksignale hervorgerufen werden können, beseitigt und aus dem verbleibenden Punkthaufen der ermittelten Koordinaten ein Mittelwert berechnet werden können.

Die ermittelten Koordinaten lassen sich mit streckenspezifischen oder geographischen Merkmalen

4

verknüpfen, die über den Radio-Daten-Signal Traffic-Message-Channel ausgestrahlt werden, so daß dem Fahrer des betreffenden Fahrzeugs nur diejenigen Verkehrsnachrichten übermittelt werden, die für seinen Standort relevant sind.

Außerdem ermöglichen die berechneten Koordinaten des eigenen Standorts dem Fahrer, eine grobe Orientierung zu erhalten, was in unbekannten Gegenden mit dünner Besiedlung und unzureichender Beschilderung sowie auch im Pannenfall hilfreich sein kann.

**Patentansprüche**

1. Verfahren zur Standortbestimmung eines Empfängers, der mit einem Dekoder zur Dekodierung von Datensignalen, insbesondere Radio-Daten-Signale (RDS), und mit Richtantennenanordnung ausgestattet ist, dadurch gekennzeichnet, daß die Radio-Daten-Signale wenigstens dreier ortsfester Sender ausgewertet und die relativen Einfallswinkel ihrer Funksignale bestimmt werden, daß über die Auswertung der Radio-Daten-Signale die Sender ermittelt und ihre Standort-Koordinaten einer gespeicherten Tabelle entnommen werden und daß aus den relativen Einfallswinkeln und den Standort-Koordinaten der ortsfesten Sender die Standort-Koordinaten des Empfängers über trigonometrische Funktionen berechnet werden.

2. Verfahren nach Anspruch 1, dadurch gekennzeichnet, daß die trigonometrischen Funktionen nach der Methode des Rückwärtseinschneidens gelöst werden.

3. Verfahren nach Anspruch 1 oder 2, dadurch gekennzeichnet, daß die Berechnung der Standort-Koordinaten des Empfängers zyklisch wiederholt wird und aus einem Satz berechneter Werte ein Mittelwert gebildet wird.

4. Verfahren nach einem oder mehreren der Ansprüche 1 bis 3, dadurch gekennzeichnet, daß die berechneten Standort-Koordinaten des Empfängers mit streckenspezifischen und/oder geographischen Kennungen von über das Radio-Daten-Signal im Traffic-Message-Channel übertragener Verkehrsnachrichten verknüpft wird.

FIG.1

32 Feldstärken messen

34
33 Aus dem Verhältnis der Feldstärken Richtung des Senders ermitteln

38 neuen Sender ermitteln

36
34 3 Sender ermittelt?

nein

ja

40 Winkel zwischen Sendern aus Richtungen bestimmen

42 Aus Frequenz und PI-Code Sender bestimmen

44 Aus Speicher Koordinaten der Senderstandorte auslesen

46 Rückwärtseinschneiden

48 Koordinaten der eigenen Position ausgeben

FIG. 2

FIG.3